# EUROPEAN PATENT APPLICATION

(11) **EP 0 924 603 A2**
(43) Date of publication of application: **23.06.1999**
(21) Application number: 98310063.7
(22) Date of filing: 08.12.1998
(51) Int. Cl.: G06F 9/38

(54) **Compiler controlled dynamic scheduling of program instructions**

(30) Priority: 16.12.1997 US 997117
(71) Applicant: LUCENT TECHNOLOGIES INC., Murray Hill, New Jersey 07974-0636 (US)
(72) Inventor: D'Arcy, Gerard Paul, Harleysville, Pennsylvania 19438 (US); Jinturkar, Sanjay, Bethlehem, Pennsylvania 18017 (US); Glossner, C. John, Allentown, Pennsylvania 18104 (US); Vassiliadis, Stamatis, Zoetermeer (NL)
(74) Representative: Watts, Christopher Malcolm Kelway, Dr.

(57) **Abstract**

A computer's speed in executing a program is increased based on a compiler controlled dynamic scheduling of program instructions, or an system and method of dynamically storing multiple instruction dependencies in a program. This is accomplished through the use of a single *dep* instruction, which instructs the computer system's central processing unit executing the program that each instruction associated with the *dep* instruction can be executed in parallel with one another, subject to the constraints encoded within the *dep* instruction.

## Description

### Field Of The Invention

This invention relates broadly to increasing a computer's speed in executing instructions in a program.

### Background Of The Invention

In a modern computer system, a compiler translates a program written in a high level programming language (generally referred to as source code) into a lower level language program that physically executes on the computer system's processor (generally referred to as machine or object code). In some computers or machines, in addition to the compiler, an assembler is provided to allow human programmers to produce object code. Other compilers also perform the functions of the assembler to produce the object code that can be passed directly to the processor. One measure of the performance of the processor (e.g, central processing unit (CPU)) is the time it takes to execute an instruction in object code. Generally, the period of time in which a single instruction is executed (also referred to as instruction execution rate) by the processor is termed one machine cycle or cycle.

Improvements in instruction execution rates of computers are achieved by circuit-level or technology improvements and organizational techniques, such as exploitation of instruction level parallelism (ILP), cache memories, out-of-order execution of instructions and multiple, concurrent execution units in the processor. Increasingly popular is exploitation of ILP, or allowing multiple object code instructions which result from the compiler (and/or the assembler) to be issued and executed by the processor simultaneously in a single machine cycle.

A number of such computer organizations (namely, hardware and software) with varying levels of parallelism are known. The levels of parallelism relate the organization and method used to exploit the opportunities for ILP. Optimizing object code based on optimization techniques is a means by which to exploit ILP. An important optimization technique is determining dependencies (also referred to as hardware interlocks) between instructions contained in the code. Instructions are independent when, within a given number of instructions (or instruction sequence), the order of execution of the instructions does not affect the results. Various methods for optimizing code are known in the art, as shown in A. Aho et al, *Compilers, Principles, Techniques and Tools,* Addison Wesley (1988), Chapter 10. Reference is made to this publication for further description of such optimization techniques.

For example, known machines having an organization called a superscalar architecture have achieved peak instruction execution rates in excess of four instructions per machine cycle. However, in order to accomplish this, the processor includes complex hardware which decodes the object code instructions to determine the dependencies between two or more instructions (up to *m* instructions, where *m* is an integer) at the time that such code is executed by the processor. The hardware is referred to as dynamic checking logic. Such processing is very complex because it is necessary to implement a large number of rules to determine whether instruction dependencies exist.

For example, consider a superscalar machine designed to execute at most two object code instructions in parallel. Also, assume that there are *m* instructions in the instruction sequence. To maximally exploit ILP, it has been suggested that on the order of *m*^{*2*} rules must be exercised in the instruction decode hardware to determine whether or not a given pair of arbitrary instructions may be issued in parallel. The complex dynamic checking logic can produce correct results but extends the machine cycle time, owing to such processing at the processor level. In addition, necessary processor logic must be exercised each time the object code is retrieved from main memory. Since looping instructions are a common programming technique, superscalar architectures must perform checking operations each time instructions associated with a loop are executed. In addition, this is only one of the limitations of the superscalar machine that limit the performance gain achieved by exploiting ILP. Accordingly, given the limitations of the superscalar machines, the instruction execution rate may not be reduced sufficiently to warrant their use.

Another known approach to the extraction of ILP is taken in Very Long Instruction Word (VLIW) architectures. The execution units in VLIW machines require that the compiler permanently (or statically) preallocate instructions to the execution units of the processor. The execution units are hardware in the processor which receive issued instructions and execute such instructions according to the operation specified by the instruction. For example, an instruction to multiply two operands can be sent to a multiply execution unit but cannot be sent to an arithmetic logic unit (also referred to as an ALU execution unit). However, an add instruction can be sent to either an ALU or a multiply execution unit, which can execute both operations. In VLIW machines, the compiler preallocates the multiply instruction to a single execution unit, in this example, the multiply execution unit. The disadvantage of such permanent binding is that a full mapping of instructions to execution units must be stored in main memory which results in noops being stored in main memory. This increases instruction fetch bandwidth requirements (or the amount of hardware, e.g., physical lines, needed by main memory to transmit a series of instructions at the same time) and precludes object code compatibility (or the ability to maintain ILP exploitation gains when the object code is executed by another processor with a different number of execution units). For example, assume there are two add instructions preallocated to the multiply execution unit. At execution time, the processor cannot assign one such instruction to the ALU because both must be executed by multiply execution units. The result is that both instructions cannot be executed at the same time. Accordingly, the permanent binding of instructions to execution units results in lower ILP than a processor which can resolve these at execution time.

There are a number of known machine products or projects in which approaches for exploiting ILP are implemented, such as IBM's M.F.A.S.T., Texas Instrument's C6x, IBM's SCISM project and Intel's IA-64 architecture. However, each of these approaches is either limited as to the number of dependencies encoded or require large amounts of dynamic checking logic which reduce the gain achieved by exploiting ILP. Accordingly, there is a need to optimize object code by determining dependencies in its instructions in such a manner that the processor which executes the object code can fully exploit ILP. Our invention is directed to such an apparatus and method, which involve concepts not covered in any of the above products or projects.

Our invention is directed to compiler controlled dynamic scheduling, or a system and method of dynamically storing multiple instruction dependencies which a compiler has prespecified. Thin is accomplished through the use of a single *dep* instruction, which instructs the processor hardware that the next *m* instructions (where *m* is an integer) associated with such *dep* instruction can be executed in parallel with one another. In addition, the *dep* instruction, and instructions delimited by the *dep* instruction, can be stored in a Multiple Issue Buffer (MIB) implemented in the processor. The MIB is a special storage buffer separate from, smaller and faster than the main memory of the computer. It can store the instructions to be executed in parallel separately from the main memory so that when such instructions are to be executed, the processor can retrieve them from the MIB rather than the main memory. Accordingly, execution of such instructions is faster. Moreover, for multiple instruction processing, the main memory need not include hardware (e.g., transmission lines) to accommodate sending multiple instructions at the same time because the MIB is accessed for that purpose. Also, our invention can be implemented in any organization which includes the inventive features described herein, including superscalar and VLIW architectures modified to include such inventive features.

An advantage of our invention is that the *dep* instruction encodes inter-instruction dependencies at the compiler level, or before processing by the processor, in order to alleviate hardware dependency checking. The object code encoded with *dep* instructions is then extant in main memory of the computer. This eliminates the need for complex dynamic checking logic in the processor to determine hardware interlocks at execution time. Accordingly, the processor operation is simplified, therefore affords high performance, and can be operated with a reduction in power. Moreover, this advantage is magnified because the optimized code is permanent. Therefore, the *dep* instruction and subsequent delimited instructions need not be reencoded each time the instruction sequence is executed or the instruction sequence is used in another processor with a different number of execution units.

A further advantage of our invention is that the *dep* instruction does not preallocate the instructions delimited by it to a predetermined execution unit. Accordingly, in addition to supporting a high performance low power processor, the *dep* instruction does not limit the processor from allocating instructions to particular execution units at execution time. In this way, the gain in exploiting ILP at the compiler level can be maintained or further optimized by allowing the processor to allocate such instructions freely to the processor's execution units. Accordingly, prior to processing by the processor, the code is optimized to achieve the highest degree of ILP that can exist and to avoid the disadvantages of preallocating instructions to execution units.

An additional advantage of our invention is that the processor hardware can cache or store the object code instructions in the MIB, which is smaller and faster than the main storage of the computer. In this way, when the processor executes instructions associated with the *dep* instruction (referred to as the *dep* instruction packet), it can retrieve such packet from the MIB rather than from the main memory of the computer. This organization produces permanent, optimized preprocessing which can be available quickly to the processor. In addition, the architecture of the MIB implemented according to our invention allows instructions of the instruction packet within the delimited buffer boundary to issue simultaneously if enough processor execution units are available. For example, for a packet including five instructions associated with the *dep* instruction, the processor may include five execution units in order to process such instruction packet. Moreover, the *dep* instruction can also include additional information or tags about the *dep* instruction packet to provide to the processor through the MIB. Such additional information can be used in the processor for additional optimization logic implemented at the processor level.

A further advantage of our invention is object code compatibility within multiple implementations of the same organization, or organizations which differ only in the number of execution units of the processor and have one or more execution units in common. For example, two organizations each provide multiply, ALU, load and store execution units and the second organization additionally provides another multiply execution unit. Where the *dep* instruction of the present invention is designed for the first organization, it can also be executed by the second organization, and visa versa. The first organization can issue four instructions in parallel because it includes four execution units. The second organization can issue five instructions in parallel. Such execution on alternative first and second organizations is achieved because a *dep* instruction packet containing four instructions can be executed on both organizations. As to a *dep* instruction packet containing five instructions, it can execute on the second organization in parallel and on the first organization with four instructions in parallel followed by a single instruction in series.

Accordingly, our invention provides a high degree of flexibility and versatility in implementing the *dep* instruction by the processor for object code execution. Such features provide maximum exploitation of ILP in such a manner that instruction execution rate increases are maintained at execution time because additional dynamic checking logic processing by the processor is unnecessary.

### Brief Description Of The Drawings

The foregoing and other features and advantages of the present invention will be more readily apparent from the following detailed description when read in conjunction with the accompanying drawings, wherein:
FIG. 1 is a high level block diagram illustrating a complete processor system according to the present invention;
FIG. 2 illustrates a particular form of a *dep* instruction and a *dep* instruction packet encoded according to an illustrative embodiment of the present invention;
FIG. 3 is a block diagram of a processor organization constructed according to the illustrative embodiment of the present invention shown in Fig. 1;
FIG. 4 is a block diagram of a Multiple Issue Buffer constructed according to the illustrative embodiment of the present invention for the processor shown in Fig. 3; and
FIG. 5 is a block diagram of an alternative embodiment of a Multiple Issue Buffer constructed according to the present invention for the processor of Fig. 3.

### Description Of Illustrative Exemplary Embodiments

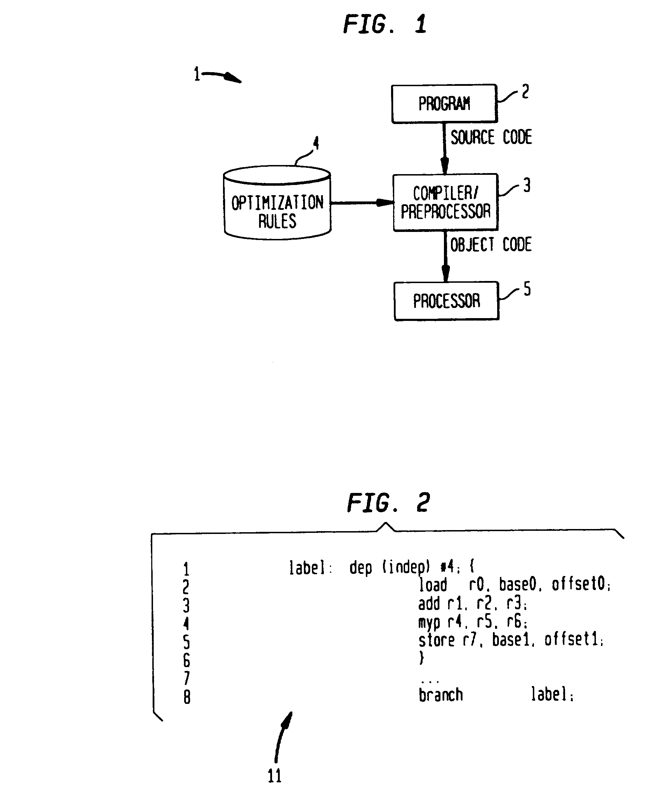

Referring to Fig. 1, there is shown a high level simplified block diagram form of a computer system or machine 1 according to an illustrative embodiment of the present invention. In the figure, a program 2 provides source code as input to a compiler/preprocessor 3. The complier/preprocessor 3 performs both a compiler function and a preprocessing function in the illustrative embodiment of Fig. 1. However, it will be understood that the compiler and preprocessor functions can be implemented by separate devices. Moreover, assembler operations could be performed by the compiler or separately by an assembler (not shown).

The compiler/preprocessor 3 examines the source code (code is also referred to as instructions within an instruction set architecture (ISA)) and identifies instruction dependencies which can be delimited by a *dep* instruction (shown in Fig. 2) in order to implement instruction level parallelism (ILP). The compiler/processor 3 uses a set of optimization rules 4 for this purpose. The compiler/preprocessor 3 produces object code optimized by the inclusion of *dep* instructions in order to exploit ILP. Such *dep* instructions are added as the first instruction of a packet of instructions delimited by it. The instruction sequence containing the *dep* instruction and the instructions delimited by it are hereinafter referred to as the *dep* instruction packet (an example of which is shown in Fig. 2 as a *dep* instruction packet 11).

Besides the operation of identifying and implementing the *dep* instructions, the operations and signals used for the operations of the compiler/preprocessor 3 are standard. Therefore, the compiler/preprocessor 3 will not be described further. Rather, reference is made to Aho, *Compilers, Principles, Techniques and Tools,* for further description of the compiler/preprocessor 3.

In addition, in alternative embodiments according to the present invention, a device other than a compiler 3 and/or preprocessor 3 can implement the *dep* instructions. For example, the facility which implements the *dep* instructions can be a software facility implemented separately from the compiler, e.g., a post-compiler, or it can be a hardware facility in the form of a hardware preprocessor located between an architected storage area, for example, a cache (or a special storage buffer smaller and faster than the main storage of the machine 1; an example of a cache is a MIB) in the machine 1, and another subsystem of such architected storage area.

The output of the compiler/preprocessor 3 is object code which is compiled and optimized to include the *dep* instructions. The object code is then applied to an a processor 5 (e.g., a central processing unit (CPU)), constructed according to the present invention, as described further below. The processor 5 hardware then fetches and issues the instructions for execution based in part on the *dep* instructions.

An important advantage of our invention is the static or permanent implementation of the *dep* instruction during processing by the compiler/preprocessor 3. Accordingly, complex dynamic checking logic in the processor to determine hardware interlocks at execution time is unnecessary. This results in simplified, and therefore high performance, processing and a reduction in power required by the processor. Moreover, this advantage is magnified because the optimized code is permanent such that every time instructions associated with loop programming techniques are executed by the processor, the instructions already contain the information encoded within the *dep* instructions. Therefore, *dep* instruction encoding need not be refetched in the event that the instructions are reexecuted by the processor.

Referring to Fig. 2, there are shown several lines of assembly code. Assembly code is shown because object code, as a lower level language, appears as a stream of 0s and Is whereas assembly code, as a higher level language, provides understandable notation and terms for ease of discussing the functionality of the code and, accordingly, the functionality of the *dep* instruction. The *dep* instruction of the assembly code shown would be translated to object code for execution by the processor 5.

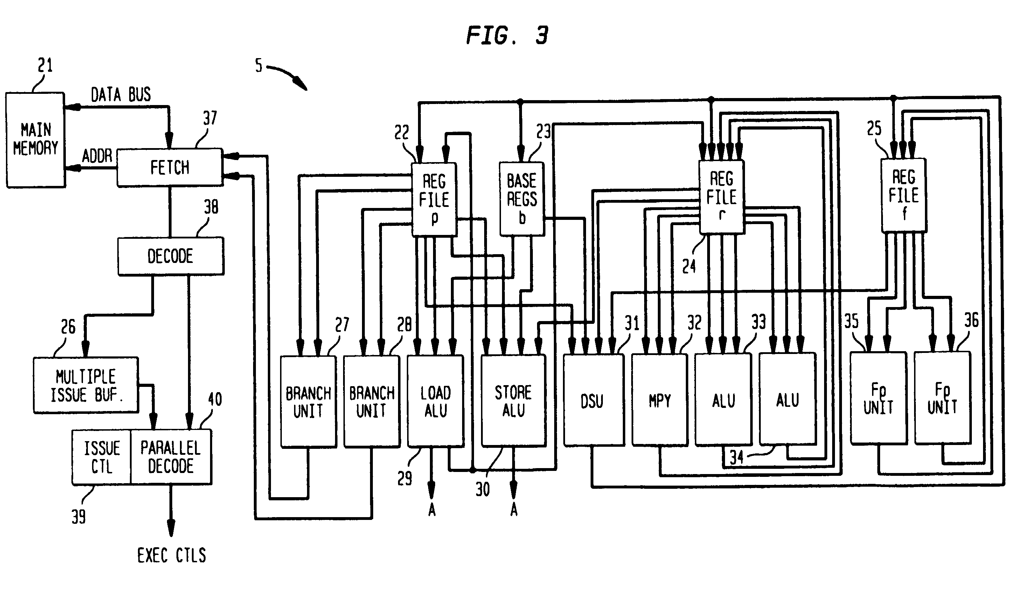

The Fig. 2 assembly code includes an exemplary *dep* instruction on line I for the instruction address location symbolically denoted by label and instructions delimited bv such *dep* instruction on lines 2 to 6 (hereinafter referred to as the *dep* instruction packet 11). Line 7 represents that any number of instructions may be included between lines 6 and line S. Line 8 contains a branch instruction, which indicates to the processor 5 to execute the instruction at the instruction address location symbolically denoted by label, or line 1 of Fig. 2. The branch instruction on line 8 is also referred to as a looping instruction because it returns to a previously defined instruction address in the code. In addition, where there are no instructions between lines 6 and 8, the branch would create a recursive loop. The assembly code shown does not have a particular overall function; rather, it is a representation of several operations, e.g., add, and multiply, performed on values loaded from a series of register file 22 to 25 (shown in Fig. 3) and the results are also stored in the register files 22 to 25.

The *dep* instruction shown on line 1 contains information pertinent to how a sequence of instructions is to interact. One form of interaction is for the instructions to be executed concurrently, as is shown in the *dep* instruction packet 11. On line 1, the label is the symbol name that refers to the instruction address at which the *dep* instruction is found. The term "dep" indicates that it is a *dep* instruction. The information between the parenthesis, namely "indep", specifies the type of the *dep* instruction (additional types of *dep* instructions are described below). In this example, the type is independent. The independent *dep* instruction is the primary type of *dep* instruction of our invention. It indicates to the hardware of the processor 5 that the next *m* instructions can be executed concurrently. The value of *m* in Fig. 2 is four (as shown by the #4), so the next four instructions are delimited by the *dep* instruction. The instructions following the *dep* instruction on lines 2 to 8 include instruction types, namely, load, add, multiply (shown as mpy) and store instructions. The names of the instruction types also indicate their functions. For example, the add instruction type performs an arithmetic addition operation. The references to the right of the instructions, (e.g., the load instruction on line 2 is followed by "r0, base0, offset0") are pointers to addresses in the processor 5 main memory contained in register files 22 to 25 shown in Fig. 3. Such addresses contain data which the instruction operates on. The "r0" indicates where data in main memory will be loaded to from an address calculated by base0 plus offset0.

Implementation of the *dep* instruction according to the present invention requires an optimizing compiler/preprocessor 3 (shown in Fig. 1) or a programmer to identify ILP opportunities within an instruction sequence of the program 2 (shown in Fig. 1). A number of techniques which uncover ILP are known in the art. These include, for example, trace scheduling, percolation scheduling and software pipelining, as descnbed in the following articles: C. Foster et al., *Percolation of code to enhance parallel dispatching and execution,* IEEE Transactions on Computers, C-21:1411-1415 (Dec. 1972); M. Lam, *Software Pipelining: An effective scheduling technique for VLIW machines,* In Proceeding of the SIGPLAN'88 Conference on Programming Language Design and Implementation, pp. 318-328 (1988); B.R. Rau et al., *Efficient code generation for horizontal architectures: Compiler techniques and architectural support,* In proceedings 9th Annual Symposium on Computer Architecture, pp. 131-39 (April 1982); and J. A. Fisher, *Trace Scheduling: A technique for global microcode compaction,* IEEE transactions on Computers, vol. C-30, No. 7 (July 1981), pp. 478-490. Reference is made to these articles for further descriptions of such optimization techniques.

For example, consider the following versions of exemplary programming code. Each version provides the same operations, namely multiplying the values of a series of 0 to N vectors (denoted by the variable i) and adding the results of such series of multiplication. The functionality is shown in the first version written in the C programming language, which is a higher level language. This higher level language code is then translated into two versions assembly code, i.e., lower level languages. The first assembly code version translates the C programming code without implementing the *dep* instruction and the second assembly code version translates the C programming code including implementing the *dep* instruction. These versions provide a comparison of how the *dep* instruction improves the speed of the processor 5.

The C language code is shown as follows (and will hereinafter be referred to as the C code example; the lines shown can be contained within a larger loop in the program 2 and include a simplified inner loop):

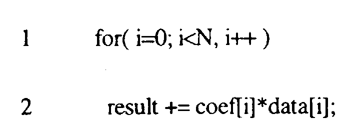

The first assembly language version is the translation of the C code example to its assembly code equivalent where the compiler/preprocessor 3 does not optimize the code based on the *dep* instruction. It contains the same functionality as the C code example. The following is hereinafter referred to as the non-*dep* code example: 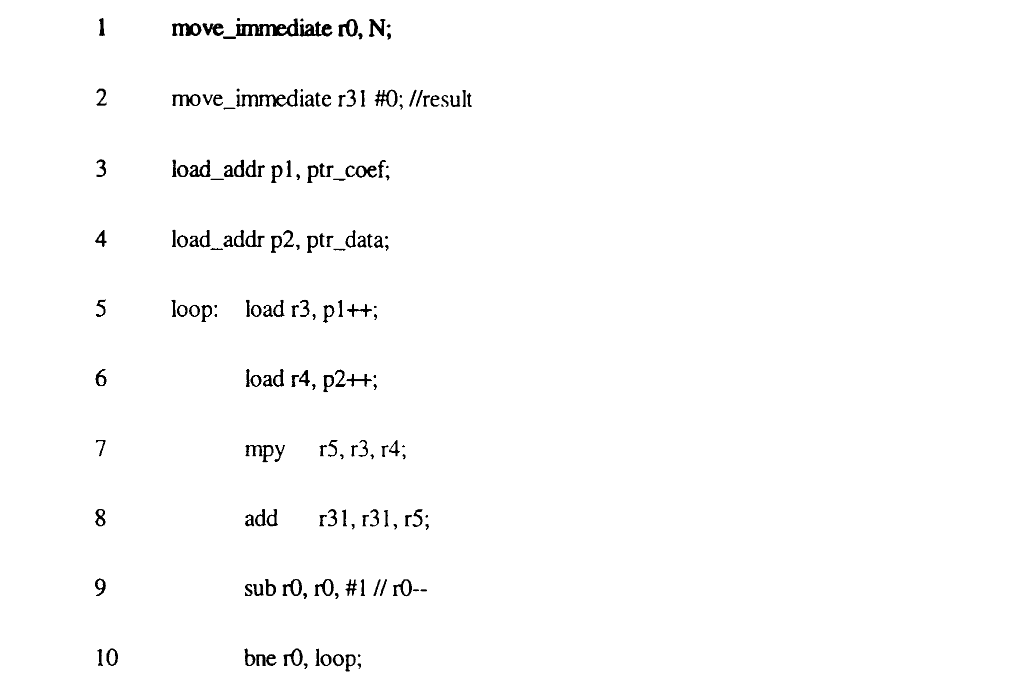 This non-*dep* code example has the same functionality as the C code example above. However, the operations are directed to the lower level processing implemented in assembly code necessary to execute the C code example, such as multiply and subtract operations on data from the register files 22 to 25. In addition, move, load and store operations are shown. Finally, on line 10 of the non-*dep* code example, a term "bne" is shown. This term means a condition referred to as branch if not equal (i.e., the value contained in r0 is not equal to zero). When the condition is found, the instruction instructs the processor to go to the instruction address location symbolically denoted by the term "loop" shown next to bne and to execute the instruction at that address.

The second assembly language version is the translation of the C code example to its assembly code equivalent where the compiler/preprocessor 3 optimizes the code based on the *dep* instruction. It contains the same functionality as the C code example and the non-*dep* code example. The following is hereinafter referred to as the *dep* code example: 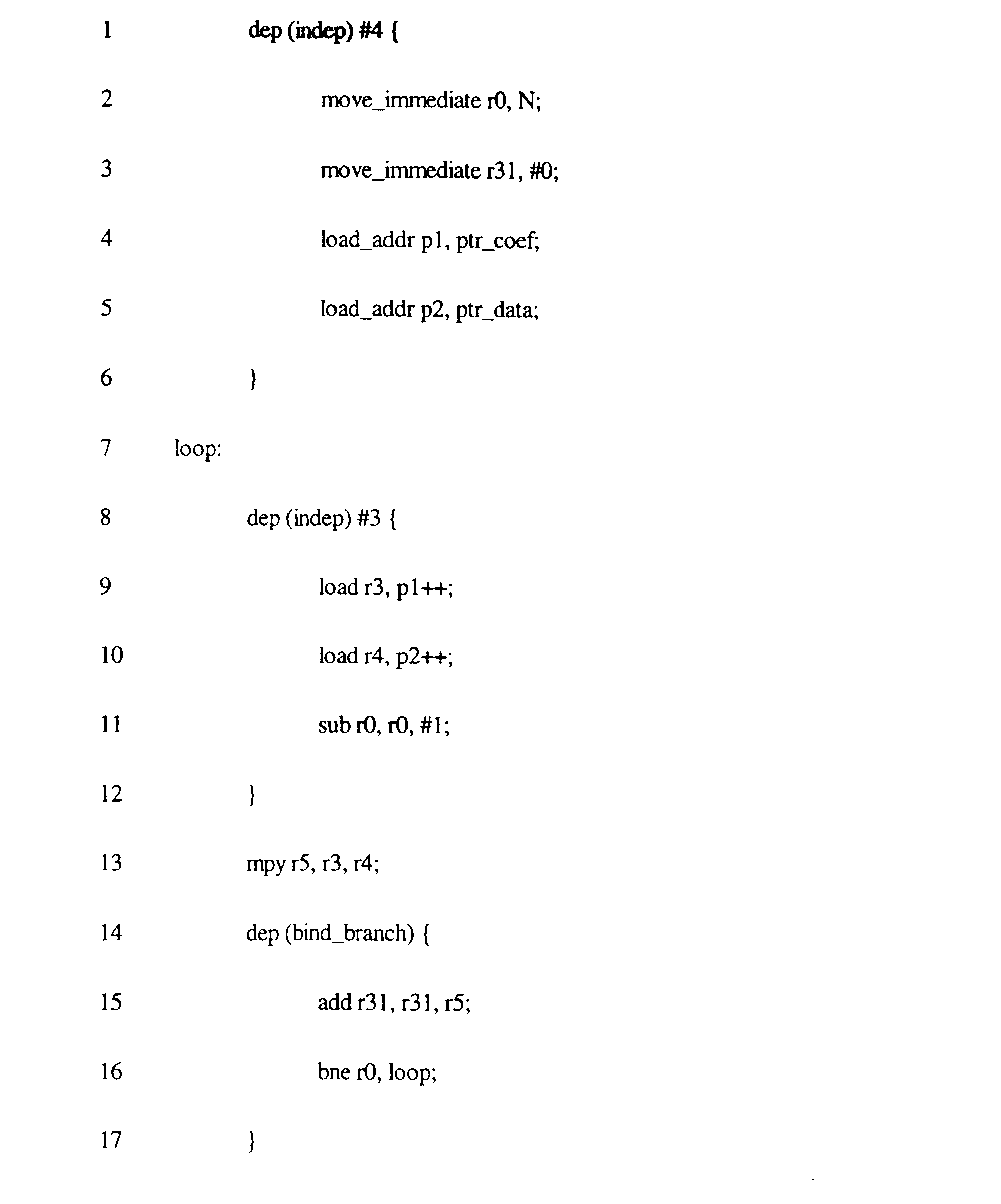 The bind_branch indicates to the processor 5 hardware that all instructions within the *dep* instruction must execute prior to the branch taking effect, as further discussed below. Also, the bne means branch if not equal and is used to implement the loop.

The difference between the *dep* code example and the non-*dep* code example is that the *dep* code example implements greater optimization techniques than the non-*dep* code example. As a result, for multiple loop iterations, the *dep* code example can be executed in fewer machine cycles than the non-*dep* code example.

More particularly, comparing the processing of the *dep* code example to the non-*dep* code example, advantages of such *dep* instruction for optimizing programming code is shown. In the *dep* code example, where one instruction is executed per cycle, the first time the code sequence is executed, three additional cycles are required versus the non-*dep* code example. This is because three *dep* instructions have been added to the assembly code. While the *dep* instructions can initiate the execution of instructions in parallel, such *dep* instructions themselves are not executed in parallel. However, on the first execution of lines 8 to 12, they can be stored in a storage device, for example, a Multiple Issue Buffer (MIB) 26 (shown in Fig. 3) for fast parallel retrieval. In this way, on subsequent iterations of the inner loop (lines 8 to 12 of the *dep* code example), the loop executes in three cycles while the non-*dep* code example in lines 5 to 10 executes in six cycles. Therefore, if the loop on lines 8 to 12 of the *dep* code example is executed twice, the break-even point in terms of the number of machine cycles for the *dep* code example versus the non-*dep* code example has been achieved. In addition, during any subsequent reexecution (i.e., a loop can be called multiple times during a program) of lines 8 to 12 of the *dep* code example, further savings in machine cycles are achieved.

Referring to Fig. 3, there is shown a block diagram of the processor 5 according to the illustrative embodiment of the present invention. The processor includes architected storage areas 21 to 26, execution units 27 to 36, a fetch 37, a decoder 38, an issue control 39 and a parallel decoder 40. The architected storage areas 21 to 26 are a main memory 21 and a set of register files 22 to 25 and a MIB 26. The register files are separate register devices which are grouped together in order to use common transmission lines for the input and the output of data to and from such files. The register files 22 to 25 are a register file offset 22, a register file base 23, a register file r24 and a register file f25. The execution units 27 to 36 are a branch unit 27, a branch unit 28, a load ALU 29, a store ALU 30, a data service unit (DSU) 31, a multiply (MPY) 32, an ALU 33 and an ALU 34.

The main memory 21 stores the instructions of the object code, which includes the *dep* instruction packet 11. Alternatively, the object code can be stored in a separate memory storage area, such as, for example, a cache or a disk. The register files 22 to 25 are storage devices with data intended for particular execution units 27 to 36. In the illustrated embodiment, the register file 22 corresponds with the branch units 27 and 28, the load ALU 29, the store ALU 30 and the DSU 31. The register file base 23 corresponds to the load ALU 29, the store ALU 30 and the DSU 31. The register file r24 corresponds to the DSU 31, the MPY 32, the ALU 33 and the ALU 34. The register file f25 corresponds to the Fp unit 35 and the Fp Unit 36.

The execution units 27 to 36 are logic devices which implement specific types of mathematical operations and are dedicated to these specific operations. When the processor 5 processes each instruction, it determines the operations indicated by the instruction and, based on the operation, which of the execution units 27 to 36 can implement the instruction. The branch units 27 and 28 execute assembly program instructions that may branch to another instruction address. The load ALU 29 loads a value into the r or f register files 24 or 25 to be used in arithmetic operations and the store ALU 30 stores register file contents to main memory. The DSU 31 performs shift, bit manipulation and data permutation. The MPY unit 32 performs multiplication and possibly arithmetic and logical functions. The ALU units 33 and 34 perform arithmetic operations. The Fp units 35 and 36 perform floating point operations. The execution units 27 to 36, additionally communicate with the register files 22 to 25 which are used in the operation of such units 27 to 36. The operations and the signals for such operations of the execution units 27 to 36 and register files 22 to 25 are standard, as shown in J.L. Hennessy, D Goldberg and D. Patterson, *Computer Architecture*: *A Quantitative Approach,* Morgan Kan (2d. Ed. Aug. 1995). Reference is made to this publication for a further description of execution units and register files.

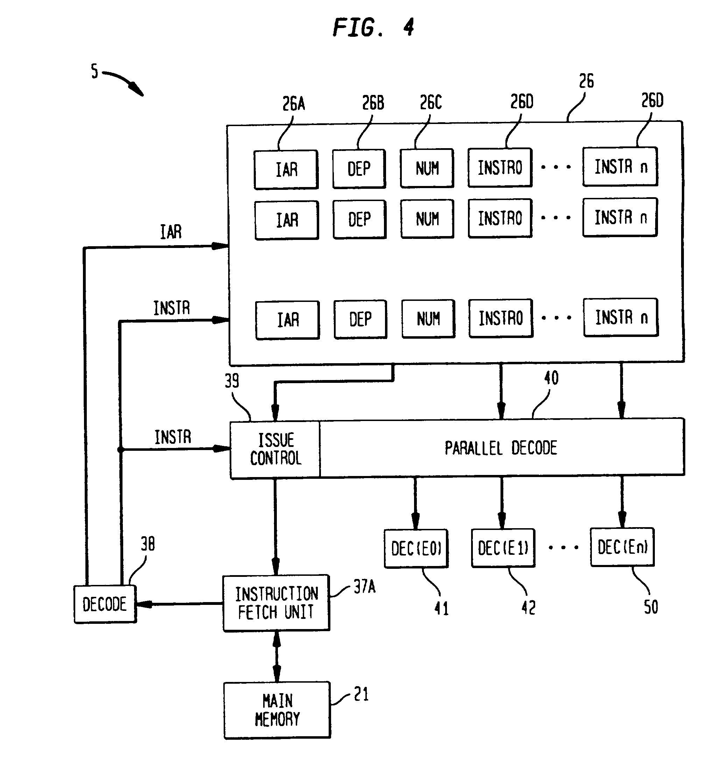

The general operation of the processor 5 according to the present invention using the *dep* instruction packet 11 of Fig. 2 is as follows: The fetch 37 fetches instructions from the main memory 21 based on the instruction address pointed to by an Instruction Address Register (not shown) contained in an Instruction Fetch Unit 37A (the IAR and Instruction Fetch Unit 37A are contained within the fetch 37; the Instruction Fetch Unit 37A is shown in Fig. 4). The instruction is thereafter sent to the decoder 38, which in the illustrative embodiment is a serial decode unit used to determine the type of operation to be performed based on the instruction. The instruction is then sent to the issue control 39. The issue control 39 is responsible for comparing the IAR in the MIB 26 with the IAR in the fetch 37. If a match is not found, it then updates the IAR in the fetch 37 with the instruction address to continue execution from and instructs the fetch 37 to fetch the address from the main memory 21. If a match is found, the instruction is a *dep* instruction and the IAR is cached in the MIB 26 along with the inter-instruction dependencies for transmittal to the parallel decode 40 which issues the instructions for parallel execution by the execution units 27 to 36. The issue control 39 can also map program instructions, including instructions in the dep instruction packet 11, to execution units 27 to 36. The issue control 39 implements additional optimization of program instructions by performing this mapping function. In addition, in alternative embodiments of the present invention, another logic device, for example the parallel decode 40 alone or in combination with the issue control 39 (both of which are included in the processor 5) can perform this mapping function. Moreover, in further alternative embodiments, one or more logic located outside the processor 5 can perform the mapping function.

Fig. 3 also shows control and data signals between the main memory 21 and the fetch 37. In addition, the execution controls (shown in Fig. 3 as exec ctls) are outputs from the parallel decode 40 and are used to control the execution units 27 to 36 (for ease of reference, the inputs of the execution controls to the units 27 to 36 are not shown).

The MIB 26 is further described with reference to Fig. 4, in which is shown the MIB 26, the instruction fetch unit 37A, the main memory 21, the issue control 39, the parallel decode 40 and a set of decode units 41 to 50 (for ease of reference, only units 41, 42 and 50 are shown). Each of the decode units 41 to 50 are associated with one of the execution units 27 to 36. Such units 41 to 50 further process the instructions before transmitting them for execution by the execution units 27 to 36. This additional processing is known in the art and therefore will not be further described herein.

The MIB 26 of the illustrative embodiment includes a series of storage areas, hereinafter referred to as records (for ease of reference, 3 records are shown in Fig. 4). Each record within the MIB 26 can contain a IAR field 26A, a DEP field 26B, a Num field 26C, and instruction fields 26D (shown as InstrO to Instr*n*, where *n* is the number of instructions within a given record of the MIB 26). In addition, *n* is equal to the number of execution units 27 to 36 (or the value ten) in the processor 5 constructed according to the present invention. The number of instruction fields 26D equals the number of execution units 27 to 36 because during parallel execution of the *dep* instruction packet 11, where the number of delimited instructions is less than *n* such that each of the execution units 27 to 36 are not needed for a parallel execution, the unused execution units 27 to 36 must receive a noop. Noops or no operation instructions are instructions indicating to the execution units 27 to 36 corresponding to such instruction fields 26D that no operations are to be performed. For those instruction fields 26D which do not contain an instruction from the *dep* instruction packet 11, the decode 38 writes noops to such fields 26D.

Another important advantage of the present invention is that the noops are implemented in the instruction fields 26D of the MIB 26 rather than in the main memory 21. This allows for compressed instructions to be stored in the main memory 21. In addition, the number of transmission lines of the main memory 21 required to transmit an instruction sequence in the main memory 21 to the processor 5 is reduced where noops are not stored in the main memory 21. Finally, this feature of our invention allows the processor 5 to allocate instructions associated with the *dep* instruction packet 11 in the MIB 26 according to the optimal use of execution units 26 to 37, rather than based on a predetermined binding of instructions and noops. Once the processor 5 has allocated the *dep* instruction packet 11 to the MIB 26, the instruction fields 26D for which no instruction is written can contain noops or have noops written to them. Therefore, main memory 21 storage space and hardware are reduced and the processor 5 is able to maintain or further optimize the gain achieved by exploiting ILP by freely allocating the execution units 26 to 37.

The general operation of the MIB 26 according to the present invention using the *dep* instruction packet 11 of Fig. 2 is as follows: The execution of the *dep* instruction causes the contents of the IAR (at the instruction address label) to be written into the MIB 26. When the next four instructions are fetched, the processor 5 may sequentially execute the (indep) type *dep* instruction while writing the instruction concurrently into the MIB 26. Another alternative is for the processor to fetch all the instructions delimited by the *dep* instruction and then issue them in parallel. When the branch label instruction is executed, the IAR is found in the IAR field 26A of the MIB 26 and all four instructions are issued in parallel.

As the program executes, the instructions are written into the MIB 26 in much the same manner as a trace cache, as described in Rotenberg et al., *Trace Cache: a Low Latency Approach to High Bandwidth Instruction Fetching,* Proceedings of the 29th Annual International Symposium on Microarchitecture, pp. 24-24 (Dec. 1996). Later, when the object code branches to an instruction address that is within the MIB 26, the machine can issue all of the instructions in parallel subject to the constraints of the stored dependency information. For alternative embodiments of the present invention, where the MIB 26 can not physically store all of the instructions in the *dep* instruction packet 11 (i.e., the number of records in the MIB 26 are full and no additional records can be written or the value of *n* is less than four, for example, there are two instruction fields), the processor 5 can issue two of the instructions of the *dep* instruction packet 11 in parallel followed by the remaining two instructions in series. For such embodiments, the Num field 26C specifies how to increment the IAR in the fetch 37 so that the original instruction sequence of the *dep* instruction packet 11 is preserved.

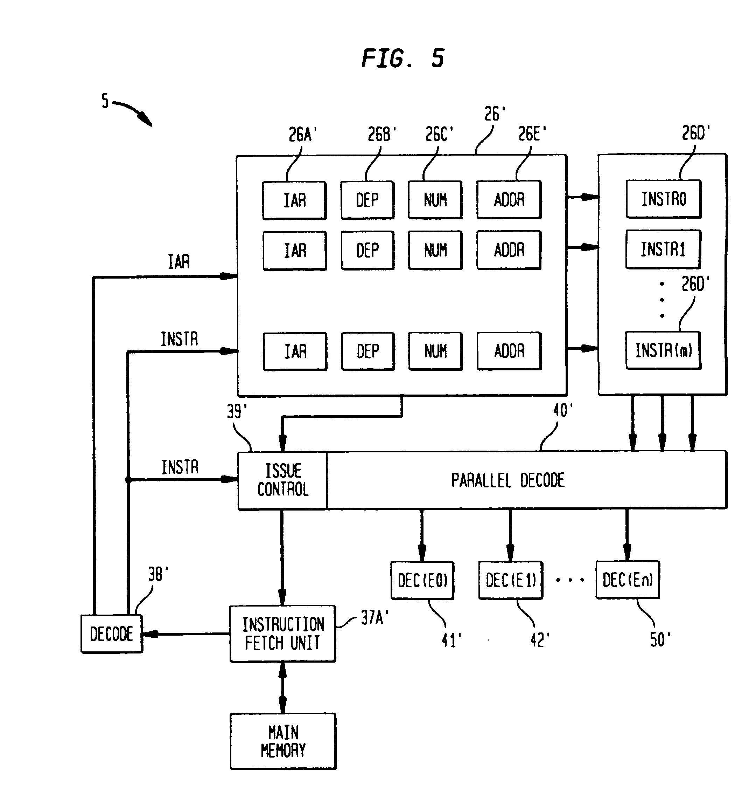

Referring to Fig. 5, it is shown that it is not necessary for the organization of the cache or the MIB 26 to be a fixed length buffer, as in the illustrative embodiment of Fig. 4. Fig. 5 depicts an implementation of a MIB 26' according to an altemative embodiment in which there are no noops stored in the instruction fields 26D'. Other than the MIB 26', the devices of Fig. 5 are identical to those of Fig. 4 and have been assigned identical reference characters. As to the MIB 26', the difference is that the instruction fields 26D' (i.e., instr0 to instm) are located in a storage device separate from the MIB 26'. Based on the use of a separate storage area, the MIB 26' is generally referred to as a two-level buffer and requires the storage of additional information. In particular, an address field 26E' (shown as Addr in this figure) stores the memory address of the first delimited instruction within the *dep* instruction packet 11. This has the advantage of rendering unnecessary additional noop storage space in the MIB 26. In this case, the Num field 26C specifies how many instructions to read from the instruction fields 26D' and additionally how to increment the IAR field 26A.

A possible requirement of the MIB 26' embodiment of the present invention is the defragmentation of memory. Because the number of instructions stored at each address field 26E' is variable, it is possible that the memory may become fragmented. This may cause unnecessary evictions from the cache or require occasional compaction. Defragmentation is related to a constraint of architected storage spaces and is known in the art. Therefore, it will not be described further herein.

It is also possible for the MIB 26' instruction fields 26D' to store more instructions then can be physically executed by the hardware of the processor 5 (shown in Fig. 3). In this case, the issue control 39' logic is responsible for assembling the object code instructions into executable packets, allocating execution units 27 to 36 (as shown in Fig. 3) and routing the instructions over a number of cycles.

For either the MIB 26 or the MIB 26' shown in Figs. 4 and 5, respectively, since they operate as a cache, there are a limited number of instructions which can be stored at a given time. Accordingly, there are numerous known methods for systematically clearing instructions from the MIB in order to allow for the storage of other instructions. However, it is possible to introduce some additional operations which help to ensure real-time behavior. (For purposes of clearing instructions, the MIB 26 and the MIB 26' can be used interchangeably.) In particular, specific instructions delimited by the *dep* instruction can be "locked" within the MIB 26 or 26'. This can avoid a potential thrashing condition (as is known in the art and will not be further described herein) on implementations that have restricted numbers of entries. It may also allow instruction execution rates to be accurately determined. A lock-MIB operation may be specified in a number of ways. First, a separate instruction can lock the contents of the entire MIB in place until a separate unlock_mib instruction is executed. Under program control, it can also specify that the current contents can not be evicted but additional locations can be free to cache the *dep* instructions in the MIB. Second, a bit (or a binary 0 or 1) in the *dep* instruction can lock an individual record of the MIB. If no MIB is present, this bit is ignored. Additionally, if the MIB is full and all the records are currently locked, the bit is ignored. This can have a negative impact on performance. It is also possible to unlock a particular record of the MIB by the following instruction sequence: 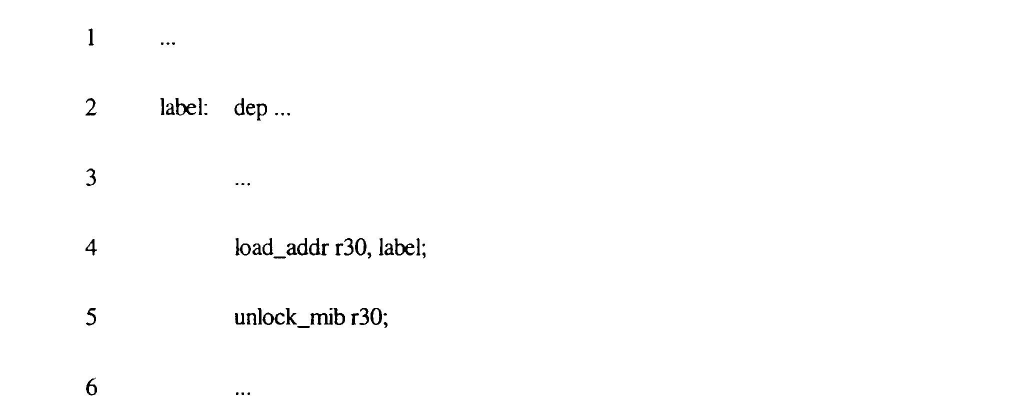 This instruction sequence at line 4 loads the instruction address label into the register file r24 at location 30. Because the MIB 26 stores the *dep* instruction packet 11 by the IAR, an instruction can be unlocked by referencing the IAR at which it is stored in the IAR field 26A of the MIB 26.

Another important operation for use with a single-level MIB, or the MIB 26, is a flush_mib. This instruction clears the contents of the MIB 26 and sets all instructions in the instruction fields 26D locations to noops. In this way, noops are extant in each instruction field 26D such that they do not need to be written again when the *dep* instruction packet contains fewer than *n* instructions.

Referring once again to Fig. 3, in alternative embodiments, the *dep* instruction according to the present invention can be used even if there is no MIB 26 (or any type of cache) present. In this case, all that is required is an instruction bandwidth, which is a storage area in a device of the processor 5 capable of storing the instructions to be issued in parallel. If the fetch 37 can hold the instructions delimited by the *dep* instruction, then the instruction bandwidth would still be reduced. In this case, all instructions which operate on the MIB 26 or any type of cache (e.g., lock_mib and flush_mib) are ignored.

Referring once again to Fig. 2, in further alternative embodiments, additional types of *dep* instructions can be used alone or in addition to the independent type of *dep* instructions. One such additional type is the concurrent type. This type indicates to the processor 5 (shown in Fig. 3) that the delimited instructions should appear to be issued concurrently. This affects the values read from the register files 22 to 25 which are used for implementing such instructions. Rather than receiving the updated values (as viewed from the serial instruction sequence), the pertinent register files 22 to 25 receive the value contained in the pertinent register files 22 to 25 prior the *dep* instruction. Accordingly, where each of multiple instructions effect overlapping addresses in the register files 22 to 25 and require the values in such addresses prior to either instruction being executed, the concurrent type of *dep* instruction is used. An example of this is a swap. Normally, a temporary register must be used to perform a swap operation. For example, where r0 and r1 in the register file r24 are to be swapped, a temporary register r3 is established to store one of the values in either r0 or r1 in order to ensure so that the values prior to instruction execution are swapped rather than overwritten values. With the *dep* instruction, a swap can be accomplished as: 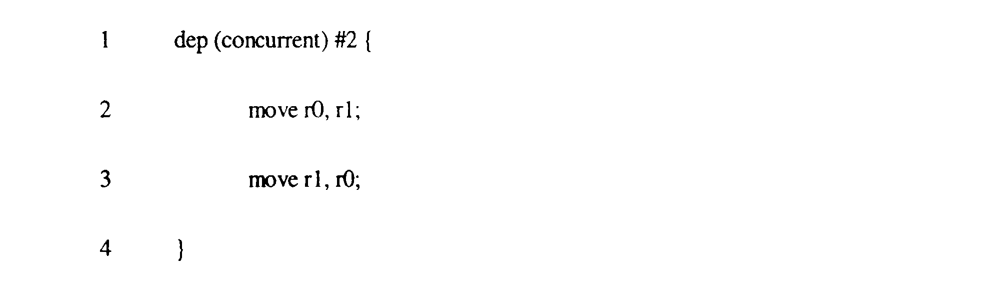 In this example, the temporary register r3 is not needed. Rather, the swap operation is executing using two separate execution units which have separately loaded the values of r0 and r1 prior to any instruction execution. In this way, the values written as a result of the operations are based on the original values in the r0 and r1 registers rather than any overwritten values.

Another type of *dep* instructions for use in altemative embodiments is the bind_branch type *dep* instruction. This informs the processor 5 hardware that all of the instructions can issue in parallel but the branch instruction may not execute until all other instructions within the *dep* instruction packet have completed execution. For a processor 5 with enough resources to execute the entire delimited instructions in a single cycle, this is equivalent to an (indep) type *dep* instruction. However, for a processor 5 which requires multiple cycles to execute an entire *dep* instruction packet, it is necessary to delay the effects of the branch until all the instructions within the packet have executed.

Further types of such *dep* instructions are branch prediction or speculative operation types. The branch prediction *dep* instruction specifies the equivalent of the bind_branch type except that the processor 5 hardware also statically predicts that the branch will be taken, for example: 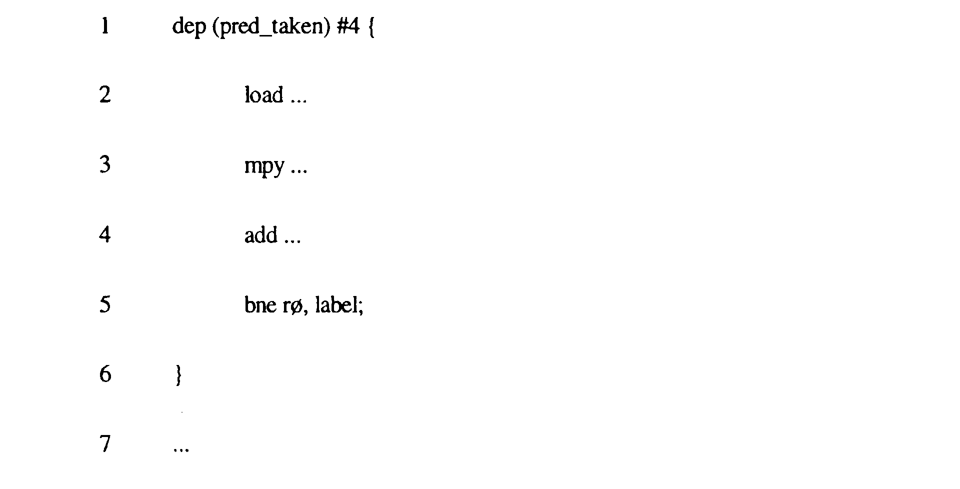 The bne or branch function (as described above) is used in this example. When the value in r0 is not equal to a 0, the instruction instructs the processor to go to the instruction address shown next to bne, namely the symbolic address label, and to execute such the instruction at that address, namely the prod_taken *dep* instruction. The prod_taken *dep* instruction type allows the processor 5 hardware to begin fetching instructions from the address label at the earliest possible stage of the processor and the pipeline (not shown) which can accommodate such instruction. For example, a standard processor 5 pipeline includes four stages, namely fetch, decode, execute and write back while a high performance processor 5 can include more than four stages such that the number of stages is greatly increased. Moreover, the processing of instructions occurs during a particular stage of the processor 5. The operations of the processor 5 as to stages and processing instructions is known in the art and will not be discussed further herein. Using the branch prediction type, instructions are processed in a shorter cycle time than for normal processing of the processor 5.

A speculative operation type involves executing a series of instructions in order to use the processor 5 at the earliest possible time it is available to execute an instruction but waiting until the outcome of a condition is known (e.g., based on a branch instruction) to store the results of such execution (also referred to as committing results). For example, in an exemplary speculative operation, while the series of instructions are executed, they will be stored only if the branch condition is met. In this way, the processor 5 is used at maximum efficiency with the expectation that the outcome of the condition will enable storage of instruction executions (depending on how the speculative operation type is set up, whether meeting the condition enables storing the results or not) . Accordingly, the outcome of the condition can also result in rendering the results of such execution moot such that the results are discarded. The operation is speculative because there is a chance that the results of execution of a series of instructions may be discarded. However, efficiencies can be gained when the results are usable. More particularly, with the speculative operation type, the results are not committed until the outcome of some condition is known. In some cases, speculative operations allow the processor 5 hardware to optimize the utilization of the execution units 27 to 36. However, it can require that some results be discarded. For example: 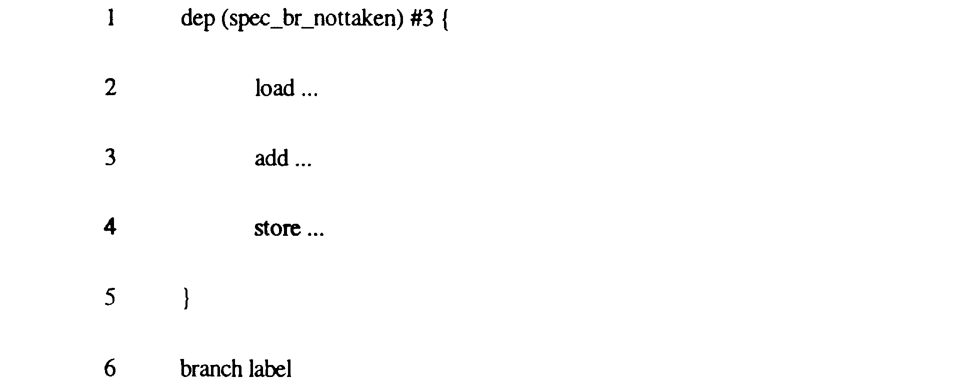 This *dep* instruction packet specifies that the entire delimited packet is a speculative operation. In this example, the condition is a branch instruction and, if the branch is not taken, the instruction sequence is stored in the register files 22 to 25 for execution (also referred to as committing an instruction. Otherwise, if the branch is taken, the results are discarded. This type of operation is particularly important for store instructions because it addresses the difficult problem of moving store instructions above branches when attempting to issue a large number of parallel instructions.

As to each of the above types of *dep* instructions, the issue control 39 may have to handle complex issue strategies and may need to contain enough architecturally invisible registers 22 to 27 to hold all intermediate computations. This is particularly true of the concurrent type *dep* instruction. Such issue strategies and organization for the processor 5 are known in the art and therefore will not be further discussed herein. In addition, in alternative embodiments of the present invention, in the above the *dep* instruction types can be used alone or in combination with one or more of any other such type. The use and combination of the *dep* instruction types is a matter of design preference and does not limit the present invention.

An advantage of our invention is object code compatibility within multiple implementations of the same organization, or organizations which differ in the number of execution units of the processor and have one or more execution units in common. For example, two organizations each provide multiply, ALU, load and store execution units and the second organization additionally provides another multiply execution unit. Where the *dep* instruction of the present invention is compiled for the first organization, it can also be executed by the second organization without recompilation, and vice versa The first organization can issue four instructions in parallel because it includes four execution units. The second organization can issue five instructions in parallel. Such execution on alternative first and second organizations is achieved because a *dep* instruction packet containing four instructions can be executed on both organizations. As to a *dep* instruction packet containing five instructions, it can execute on the second organization in parallel and on the first organization with four instructions in parallel followed by a single instruction in series without having to recompile the object code. However, the performance time for each the organizations to execute the *dep* instruction packet can differ based on different performance times for parallel processing of all instructions in the packet compared to parallel processing of some instructions followed by serial processing of the remainder in the packet.

Having thus described the present invention, it is to be understood that the above-described apparatus and method embodiments are illustrative of the principles of the present invention and that other methods and apparatus embodiments may be devised by those skilled in the art, without departing from the scope of the invention. In particular, the *dep* instruction packets and the *dep* instructions shown herein are merely exemplary of types of *dep* instructions and are not required alone or in combination. In addition, such packets and instructions as well as the processor organizations shown herein are merely exemplary of *dep* instructions and processor organizations which exploit ILP. However, they are not limitations as to the *dep* instructions nor processors which can be constructed according to the present invention.

## Claims

1. A computer program product comprising:
a computer usable medium having a computer readable program embodied therein for execution by a computer processor, the computer readable program comprising:
a plurality of computer readable program instructions for performing predetermined operations for execution by the computer processor; and
at least one of the computer readable program instructions being a dependency instruction containing information about at least two of said plurality of computer readable program instructions which can be processed by the computer processor for concurrent execution.

2. The computer program product in accordance with claim 1 wherein the information in said at least one dependency instruction is generic as to a plurality of different computer processors so that said product is compatible for execution with a plurality of computer processors and each of said plurality of computer processors includes a plurality of concurrently operable execution units which can be different in number and type than said plurality of concurrently operable execution units of another of said plurality of computer processors.

3. A method for reducing processing time for a computer processor to execute a plurality of program instructions, said computer processor having a plurality of concurrently operable execution units, said method comprising the steps of:
including in said plurality of program instructions at least one dependency instruction containing information about a set of said plurality of program instructions which can be executed independently of each other;
forming a group of at least two of said set of program instructions in response to said dependency instruction; and
executing concurrently in a group of concurrently operable execution units of said group of program instructions.

4. The method in accordance with claim 3 further comprising the step of storing at least two of said plurality of program instructions.

5. The method in accordance with claim 4 wherein said storing step is performed with one of a cache and a multiple issue buffer.

6. The method in accordance with claim 4 further comprising the steps of storing at least two of said plurality of program instructions in storage devices, a first of said storage devices storing said information contained in said dependency instruction and a second of said storage devices storing said group of program instructions.

7. A system in a computer having the ability to execute at least two of a plurality of program instructions concurrently, said system comprising:
a plurality of program instructions, at least one of said plurality of program instructions stored in the computer;
at least one of said program instructions being a dependency instruction containing information about at least two of said plurality of program instructions which can be executed independently of each other;
a computer processor having at least two concurrently operable execution units for processing said plurality of instructions; and
means in said computer responsive to said at least one dependency instruction for causing said at least two execution units to execute said at least two of said plurality of program instructions concurrently.

8. The system in accordance with claim 7 further comprising at least one storage device for storing at least two of said plurality of program instructions.

9. The system in accordance with claim 8 wherein said at least one storage device is one of a cache and a multiple issue buffer.

10. The system in accordance with claim 8 further comprising at least two storage devices for storing at least two of said plurality of program instructions, a first of said at least two storage devices storing said information contained in said dependency instruction and a second of said at least two storage devices storing said at least two of said plurality of program instructions.

11. A computer program product comprising:
a computer usable medium having a computer readable program embodied therein for execution by a computer processor, the computer readable program code means in said computer readable program comprising:
a plurality of computer readable program instructions each capable of performing predetermined operations for execution by the computer processor; and
said plurality of computer readable program instructions including at least one dependency instruction containing information about at least two of said plurality of computer readable program instructions which interact with one another for processing by the computer processor in a predetermined manner.

12. The computer program product in accordance with claim 11 wherein the information in said at least one dependency instruction is generic as to a plurality of different computer processors so that said product is compatible for execution with a plurality of computer processors and each of said plurality of computer processors includes a plurality of concurrently operable execution units which can be different in number and type than said plurality of concurrently operable execution units of another of said plurality of computer processors.

13. The computer program product in accordance with claim 11 wherein said dependency instruction indicates that said at least two program instructions associated with said dependency instruction must be executed concurrently.

14. The computer program product in accordance with claim 11 wherein:
said plurality of program instructions further includes a branch instruction which initiates the execution of another one of said plurality of program instructions;
said at least two of said plurality of instructions associated with said dependency instruction include said branch instruction; and
said dependency instruction indicates that said plurality of program instructions associated with said dependency instruction other than said branch instruction must be executed before said branch instruction is processed by said computer processor.

15. The computer program product in accordance with claim 11, said computer program product wherein:
said plurality of program instructions further includes a branch instruction which initiates the execution of another one of said plurality of program instructions;
said at least two of said plurality of instructions associated with said dependency instruction does not include said branch instruction; and
said dependency instruction indicates that said plurality of program instructions associated with said dependency instruction are executed before said branch instruction is processed by said computer processor and the results of said execution of said plurality of program instructions associated with said dependency instruction are retained in said computers only if said branch instruction is executed.

16. A method for reducing processing time for a computer processor to execute a plurality of program instructions, said computer processor having a plurality of concurrently operable execution units, said method comprising the steps of:
including in said plurality of program instructions at least one dependency instruction containing information about a set of said plurality of program instructions which interact with each other for processing by said computer processor in a predetermined manner;
forming a group of at least two of said set of program instructions in response to said dependency instruction; and
executing concurrently in a group of concurrently operable execution units said group of program instructions.

17. The method in accordance with claim 16 wherein said dependency instruction indicates that each of said at least two program instructions must be executed concurrently such that said group is formed of each of said program instructions associated with said dependency instruction.

18. The method in accordance with claim 16, said method further comprising the steps of:
including a branch instruction in said plurality of program instructions which initiates the execution of another one of said plurality of program instructions;
including said branch instruction in said set of said plurality of program instructions associated with said dependency instruction; and
based on said predetermined manner, executing said set of said plurality of program instructions other than said branch instruction before processing said branch instruction by said computer processor.

19. The method in accordance with claim 16, said method further comprising the steps of:
including a branch instruction in said plurality of program instructions which initiates the execution of another one of said plurality of program instructions;
excluding said branch instruction from said set of said plurality of program instructions associated with said dependency instruction; and
based on said predetermined manner, executing said set of said plurality of program instructions before said branch instruction is processed by said computer processor and retaining the result of said execution of said set of said plurality of program instructions only if said branch instruction is executed.

20. The method in accordance with claim 16 further comprising the step of storing at least two of said plurality of program instructions.

21. The method in accordance with claim 20 wherein said storing step is performed with one of a cache and a multiple issue buffer.

22. The method in accordance with claim 20 further comprising the steps of storing at least two of said plurality of program instructions in storage devices, a first of said storage devices storing said information contained in said dependency instruction and a second of said storage devices storing said group of program instructions.

23. A system in a computer having the ability to execute at least two of a plurality of program instructions concurrently, said system comprising:
a plurality of program instructions, at least one of said plurality of program instructions stored in the computer;
at least one of said program instructions being a dependency instruction containing information about at least two of said plurality of program instructions which interact with each other for processing by a computer processor in a predetermined manner;
a computer processor having at least two concurrently operable execution units for processing said plurality of instructions; and
means in said computer responsive to said at least one dependency instruction for causing said at least two execution units to execute said at least two of said plurality of program instructions concurrently.

24. The system in accordance with claim 23 wherein said dependency instruction indicates that said at least two program instructions associated with said dependency instruction must be executed concurrently.

25. The system in accordance with claim 23, said system wherein:
said plurality of program instructions further includes a branch instruction which initiates the execution of another one of said plurality of program instructions;
said at least two of said plurality of instructions associated with said dependency instruction includes said branch instruction; and
said dependency instruction indicates that said plurality of program instructions associated with said dependency instruction other than said branch instruction must be executed before said branch instruction is processed by said computer processor.

26. The system in accordance with claim 23, said system wherein:
said plurality of program instructions further includes a branch instruction which initiates the execution of another one of said plurality of program instructions;
said at least two of said plurality of instructions associated with said dependency instruction does not include said branch instruction; and
said dependency instruction indicates that said plurality of program instructions associated with said dependency instruction are executed before said branch instruction is processed by said computer processor and the results of said execution of said plurality of program instructions associated with said dependency instruction are retained in said computers only if said branch instruction is executed.

27. The system in accordance with claim 23 further comprising at least one storage device for storing at least two of said plurality of program instructions.

28. The system in accordance with claim 27 wherein at least one storage device is one of a cache and a multiple issue buffer.

The system in accordance with claim 27 further comprising at least two storage devices for storing at least two of said plurality of program instructions, a first of said at least two storage devices storing said information contained in said dependency instruction and a second of said at least two storage devices storing said at least two of said plurality of program instructions.
